# EUROPÄISCHE PATENTANMELDUNG

(11) **EP 3 462 601 A1**
(43) Veröffentlichungstag der Anmeldung: **03.04.2019**
(21) Anmeldenummer: 17193391.4
(22) Anmeldetag: 27.09.2017
(51) Int. Cl.: H02P 29/024, G01R 31/317, H04L 9/00

(54) **VERFAHREN ZUR IDENTIFIZIERUNG EINER ELEKTRISCHEN SCHALTUNG**

(71) Anmelder: Siemens Aktiengesellschaft, 80333 München (DE)
(72) Erfinder: Bormann, Ulf, 90518 Altdorf (DE); Hain, Stefan, 91090 Effeltrich (DE); Klos, Hans-Henning, 91249 Weigendorf (DE); Schimmer, Jürgen, 90473 Nürnberg (DE); Tacke, Dominik, 90409 Nürnberg (DE)

(57) **Zusammenfassung**

Die Erfindung betrifft ein Verfahren zur Identifizierung mindestens einer elektrischen Schaltung. Für eine einfache und fälschungssichere Implementierung wird vorgeschlagen, dass eine Signatur (10,20,22) verwendet wird, welche auf ein Leistungssignal aufmoduliert wird, wobei das Leistungssignal im Bereich einer Last erfasst und zur Identifizierung der elektrischen Schaltung ausgewertet wird.

## Beschreibung

Die Erfindung betrifft ein Verfahren zur Identifizierung mindestens einer elektrischen Schaltung.

Darüber hinaus betrifft die Erfindung eine Steuereinheit zur Durchführung eines derartigen Verfahrens.

Ferner betrifft die Erfindung ein Computerprogramm zur Durchführung eines derartigen Verfahrens.

Überdies betrifft die Erfindung ein Computerprogrammprodukt mit einem derartigen Computerprogramm.

Weiterhin betrifft die Erfindung ein Antriebssystem mit mindestens einer elektrischen rotierenden Maschine, mindestens einem Umrichter und mindestens einer derartigen Steuereinheit.

Derartige Antriebssysteme werden insbesondere im industriellen Umfeld eingesetzt. Die Leistungsfähigkeit und Zuverlässigkeit eines Antriebssystems hängt stark von der Kombination der verwendeten Komponenten, beispielsweise einem Elektromotor, einem Umrichter und einer Steuereinheit, ab, welche insbesondere aufeinander abgestimmt sein müssen. Kommt beispielsweise ein Plagiat einer elektrischen Schaltung, insbesondere eines Umrichters, zum Einsatz, kann sich, neben dem entstehenden wirtschaftlichen Schaden, die Ausfallwahrscheinlichkeit und/oder der Verschleiß des Antriebssystems erhöhen, sodass zusätzliche Kosten entstehen. Bei einem Einsatz von Umrichtern in sicherheitskritischen Anwendungen wird zusätzlich ein Gefährdungspotential ausgelöst.

Darüber hinaus kommt es insbesondere in sehr großen Anlagen vor, dass innerhalb eines Antriebssystems die falschen Komponenten zusammengeschaltet werden, was ebenso zu einem erhöhten Verschleiß, einer erhöhten Leistungsaufnahme und/oder zu einer vergrößerten Ausfallwahrscheinlichkeit führen kann. Daher ist es wichtig, die im Antriebssystem verschalteten Komponenten, beispielsweise anhand ihrer Seriennummer, zu kennen.

Der Erfindung liegt die Aufgabe zugrunde, ein Verfahren zur Identifizierung mindestens einer elektrischen Schaltung anzugeben, welches einfach und fälschungssicher zu implementieren ist.

Diese Aufgabe wird erfindungsgemäß durch ein Verfahren zur Identifizierung mindestens einer elektrischen Schaltung mittels einer Signatur gelöst, welche auf ein Leistungssignal aufmoduliert wird, wobei das Leistungssignal im Bereich einer Last erfasst und zur Identifizierung der elektrischen Schaltung ausgewertet wird.

Ferner wird die Aufgabe erfindungsgemäß durch eine Steuereinheit zur Durchführung eines derartigen Verfahrens gelöst.

Darüber hinaus wird die Aufgabe erfindungsgemäß durch ein Computerprogramm zur Durchführung eines derartigen Verfahrens bei Ablauf in einer derartigen Steuereinheit gelöst.

Überdies wird die Aufgabe erfindungsgemäß durch ein Computerprogrammprodukt mit einem derartigen Computerprogramm gelöst.

Weiterhin wird die Aufgabe erfindungsgemäß durch ein Antriebssystem mit mindestens einer elektrischen rotierenden Maschine, mindestens einem Umrichter und mindestens einer derartigen Steuereinheit gelöst.

Die in Bezug auf das Verfahren nachstehend angeführten Vorteile und bevorzugten Ausgestaltungen lassen sich sinngemäß auf die Steuereinheit, das Computerprogramm, das Computerprogrammprodukt und das Antriebssystem übertragen.

Der Erfindung liegt die Überlegung zugrunde, eine elektrische Schaltung mittels einer Signatur auf einem Leistungssignal zu detektieren. Die Signatur ist insbesondere als digitale Signatur ausgeführt. Eine insbesondere digitale Signatur ist beispielsweise ein geheimer, individueller und für die jeweilige elektrische Schaltung charakteristischer Schlüssel. Dieser Schlüssel ist insbesondere eine Kombination aus Zeichen, welche beispielsweise Zahlen umfasst.

Insbesondere ist die elektrische Schaltung an der Erzeugung oder Verarbeitung des Leistungssignals beteiligt oder das Leistungssignal wird von der elektrischen Schaltung, beispielsweise einem Umrichter, erzeugt. Das Leistungssignal wird an eine Last, beispielsweise einen Elektromotor, abgegeben und im Bereich dieser Last, insbesondere von einem Sensor, detektiert.

Eine derartige Signatur ist, beispielsweise mit Hilfe von digitaler Signalverarbeitung, leicht zu implementieren. Insbesondere im Vergleich zu einem Schild, beispielsweise mit einer Seriennummer, auf einem Gehäuse der elektrischen Schaltung ist eine über ein Leistungssignal übertragene Signatur schwer zu fälschen.

In einer bevorzugten Ausgestaltung wird das Leistungssignal von einem Umrichter zur Ansteuerung einer elektrischen rotierenden Maschine erzeugt und das Leistungssignal wird im Bereich der elektrischen rotierenden Maschine erfasst. Beispielsweise wird die Signatur auf zumindest eine Phase eines mehrphasigen Leistungssignals des Umrichters derartig aufmoduliert, dass die Funktion, insbesondere die Rotation, der elektrischen rotierenden Maschine durch die Signatur höchstens unmerklich beeinflusst wird. Die Erfassung im Bereich der elektrischen rotierenden Maschine erfolgt insbesondere kontaktlos, sodass der Betrieb der elektrischen rotierenden Maschine nicht beeinträchtigt wird. Eine Übertragung einer, insbesondere digitalen, Signatur über das Leistungssignal eines Umrichters ist einfach zu implementieren, da der Umrichter digital, beispielsweise über eine Pulsweitenmodulation, angesteuert wird, und ist schwer zu fälschen. Ferner hat die Übertragung der Signatur über das Leistungssignal des Umrichters den Vorteil, dass keine Modifikation an der elektrischen rotierenden Maschine selbst erforderlich ist, sodass eine Nachrüstung an bestehenden elektrischen rotierenden Maschinen möglich ist.

Bei einer weiteren vorteilhaften Ausgestaltung wird die Signatur als Gleichtaktsignal auf ein mehrphasiges Leistungssignal aufmoduliert. Durch die Modulation als Gleichtaktsignal wird die eigentliche Funktion der Last, beispielsweise eine Drehung einer, insbesondere mehrphasigen, elektrischen rotierenden Maschine, höchstens unmerklich beeinflusst.

Besonders vorteilhaft wird die Signatur mit einer Amplitude aufmoduliert, die mindestens 60 dB unter einer Amplitude des Leistungssignals liegt. Insbesondere liegt die Amplitude des Signals der Signatur mindestens 60 dB unterhalb der mittleren Amplitude des Leistungssignals. Durch die signifikant niedrigere Amplitude des Signals der Signatur wird die eigentliche Funktion der Last, beispielsweise eine Drehung einer, insbesondere mehrphasigen, elektrischen rotierenden Maschine, höchstens unmerklich beeinflusst.

In einer bevorzugten Ausgestaltung wird das Leistungssignal von einer Sensoreinheit, insbesondere kontaktlos, erfasst. Insbesondere bei einer kontaktlosen Erfassung sind höchstens geringe Modifikationen an der Last erforderlich.

In einer weiteren vorteilhaften Ausführungsform werden von der Sensoreinheit ein magnetisches und/oder ein elektrisches Feld gemessen. Beispielsweise werden ein Umladestrom mit Hilfe eines Magnetfeldsensors und/oder eine elektrische Feldstärke mit Hilfe eines E-Feld-Sensors gemessen. Eine Messung von magnetischen und/oder elektrischen Feldern ist sehr genau sowie leicht und kostengünstig durchzuführen.

Bei einer weiteren vorteilhaften Ausgestaltung wird von der Sensoreinheit eine Vibration gemessen. Die Vibration wird insbesondere mit Hilfe eines Schwingungssensors gemessen. Insbesondere wird ein Vibrationsspektrum, beispielsweise mit einer FFT, analysiert. Ein derartiger Schwingungssensor ist klein und kostengünstig.

Besonders vorteilhaft umfasst die Sensoreinheit einen Stromwandler. Ein Stromwandler ist ein Messwandler, der einen Teil eines zu analysierenden hohen Primärstroms, insbesondere potentialfrei, in einen gut verarbeitbaren Sekundärstrom überführt. Beispielsweise ist der Stromwandler als induktiver Stromwandler ausgeführt. Ein derartiger Stromwandler ist empfindlich und leicht nachzurüsten.

In einer bevorzugten Ausgestaltung wird das Leistungssignal durch ein Korrelationsverfahren ausgewertet. Beispielsweise wird das Leistungssignal über eine Autokorrelation oder über eine Kreuzkorrelation ausgewertet. Insbesondere bei der Verwendung einer Korrelatorbank, welche eine parallelisierte Signalverarbeitung ermöglicht, ist ein Korrelationsverfahren ein schnelles und, insbesondere im Mobilfunkbereich, etabliertes Verfahren in der Signalverarbeitung. Durch ein derartiges Korrelationsverfahren sind Signale detektierbar, welche sich im Rauschen befinden.

Bei einer weiteren vorteilhaften Ausgestaltung wird für die Signatur mindestens eine Seriennummer verwendet. Insbesondere wird die Seriennummer in der Signatur verschlüsselt. Durch eine Übertragung von Seriennummern, beispielsweise an eine Datenbank, sind nicht nur Plagiate zuverlässig identifizierbar, sondern es ist auch möglich nachzuvollziehen, welche elektrischen Schaltungen miteinander verschaltet sind.

In einer bevorzugten Ausgestaltung wird die Signatur steganographisch verschlüsselt. Durch eine steganographische Verschlüsselung wird die Signatur unauffällig in das Leistungssignal eingebettet. Beispielsweise wird die Signatur im Rauschen des Leistungssignals verborgen, wodurch die Fälschungssicherheit signifikant erhöht wird.

Im Folgenden wird die Erfindung anhand der in den Figuren dargestellten Ausführungsbeispiele näher beschrieben und erläutert.

Es zeigen:
- FIG 1: eine schematische Darstellung eines ersten Antriebssystems mit einer umrichtergesteuerten elektrischen rotierenden Maschine und einer Sensoreinheit,
- FIG 2: eine schematische Darstellung eines zweiten Antriebssystems mit einer umrichtergesteuerten elektrischen rotierenden Maschine und einer Sensoreinheit,
- FIG 3: eine schematische Darstellung eines dritten Antriebssystems mit zwei umrichtergesteuerten elektrischen rotierenden Maschinen und jeweils einer Sensoreinheit und
- FIG 4: eine schematische Darstellung eines vierten Antriebssystems mit zwei umrichtergesteuerten elektrischen rotierenden Maschinen, jeweils einer Sensoreinheit und einer Anbindung an eine Cloud.

Gleiche Bezugszeichen haben in den verschiedenen Figuren die gleiche Bedeutung.

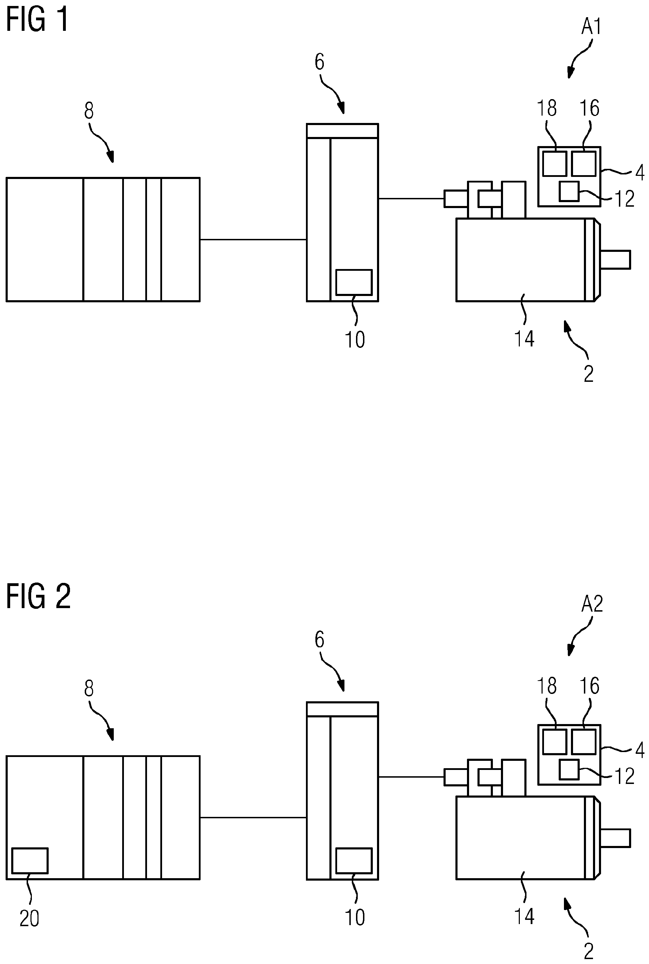

FIG 1 zeigt eine schematische Darstellung eines ersten Antriebssystems A1 mit einer umrichtergesteuerten elektrischen rotierenden Maschine 2 und einer Sensoreinheit 4. Die elektrischen rotierenden Maschine 2 ist als Elektromotor ausgeführt und wird von einem Umrichter 6 mit einem mehrphasigen, insbesondere dreiphasigen, Leistungssignal gespeist. Der Umrichter 6 wird von einer Ansteuervorrichtung 8 über ein Ansteuersignal angesteuert.

Der Umrichter 6 weist eine erste Signatur 10 auf, welche zusammen mit dem Leistungssignal an die elektrische rotierende Maschine 2 übertragen wird. Die erste Signatur 10 wird dabei als Gleichtaktsignal auf das mehrphasige Leistungssignal moduliert. Zusätzlich oder alternativ wird die erste Signatur 10 mit einer Amplitude aufmoduliert, die mindestens 60 dB unter einer, insbesondere mittleren, Amplitude des Leistungssignals liegt. Für die erste Signatur 10 wird eine Seriennummer des Umrichters 6 verwendet, wobei die Signatur steganographisch verschlüsselt wird. Zusätzlich oder alternativ wird die erste Signatur 10 mit einem Spreizcode versehen. Als Spreizcodes dienen beispielsweise M-Sequenzen oder Gold-Codes.

Die Sensoreinheit 4 weist einen Sensor 12 auf, welcher das Leistungssignal mit der aufmodulierten ersten Signatur 10 kontaktlos erfasst. Der Sensor ist beispielsweise als Magnetfeldsensor, als E-Feld-Sensor, als Vibrationssensor oder als Stromwandler ausgeführt und insbesondere außerhalb eines Gehäuses 14 der elektrischen rotierenden Maschine angeordnet. Darüber hinaus umfasst die Sensoreinheit 4 eine Auswerteeinheit 16, welche beispielsweise als Mikroprozessor ausgeführt ist, und aus dem vom Sensor 12 erfassten Signal die erste Signatur 10 extrahiert. Die Extraktion der ersten Signatur erfolgt mittels Mustererkennung und/oder Korrelation, insbesondere über eine Autokorrelation oder eine Kreuzkorrelation. Insbesondere bei einer Extraktion der ersten Signatur 10 über eine Kreuzkorrelation umfasst die Auswerteeinheit 16 beispielsweise eine Korrelatorbank. Durch ein derartiges Korrelationsverfahren sind Signale detektierbar, welche sich im Rauschen befinden. Die extrahierte erste Signatur 10 des Umrichters 6 wird beispielsweise mit einer Datenbank verglichen. Bei einer fehlenden oder fehlerhaften Signatur 10 wird beispielsweise das Leistungssignal von der elektrischen rotierenden Maschine 2 abgekoppelt und/oder ein Alarmsignal ausgegeben. Neben einer Identifizierung eines Plagiats wird ferner verhindert, dass die elektrische rotierende Maschine 2, insbesondere bei einer Einbeziehung einer Seriennummer der elektrischen rotierenden Maschine 2, mit dem falschen Umrichter 6 betrieben wird. Ferner umfasst die Sensoreinheit 4 eine Steuereinheit 18, welche den Verfahrensablauf steuert.

Die Sensoreinheit 4 umfasst beispielsweise ein Gehäuse welches die Sensoreinheit 4 mit dem Sensor 12, der Auswerteeinheit 16 und der Steuereinheit 18 umschließt. Alternativ ist zumindest eine Komponente 12, 16, 18 der Sensoreinheit 4 außerhalb des Gehäuses der Sensoreinheit 4 angeordnet und mit der Sensoreinheit 4 verbunden. Eine derartige Verbindung wird beispielsweise über Kabel, Lichtwellenleiter oder kontaktlos hergestellt.

FIG 2 zeigt eine schematische Darstellung eines zweiten Antriebssystems A2 mit einer umrichtergesteuerten elektrischen rotierenden Maschine 2 und einer Sensoreinheit 4, wobei zusätzlich zur ersten Signatur 10 des Umrichters 6 eine zweite Signatur 20 der Ansteuervorrichtung 8 auf das Leistungssignal moduliert wird. Die Modulation erfolgt beispielsweise in Zeitschlitzen, wobei in einem ersten Zeitschlitz die erste Signatur 10 und in einem zweiten Zeitschlitz die zweite Signatur 20 auf das Leistungssignal moduliert werden. Analog zur ersten Signatur 10 wird für die zweite Signatur 20 eine Seriennummer der Ansteuervorrichtung 8 verwendet, wobei die Signatur steganographisch verschlüsselt wird. Zusätzlich oder alternativ wird die zweite Signatur 20 mit einem zur ersten Signatur 10 unterschiedlichen Spreizcode versehen. Die Sensoreinheit 4 extrahiert die erste Signatur 10 des Umrichters 6 und die zweite Signatur 20 der Ansteuervorrichtung 8 aus dem Leistungssignal.

Die extrahierten Signaturen 10, 20 werden beispielsweise mit einer Datenbank verglichen. Bei zumindest einer fehlenden oder fehlerhaften Signatur 10, 20 wird beispielsweise das Leistungssignal von der elektrischen rotierenden Maschine 2 abgekoppelt und/oder ein Alarmsignal ausgegeben. Neben einer Identifizierung eines Plagiats wird ferner verhindert, dass die elektrische rotierende Maschine 2, insbesondere bei einer Einbeziehung der Seriennummer der elektrischen rotierenden Maschine 2, mit dem falschen Umrichter 6 und/oder mit der falschen Ansteuervorrichtung 8 betrieben wird. Die weitere Ausgestaltung des zweiten Antriebssystems A2 in FIG 2 entspricht der Ausführung in FIG 1.

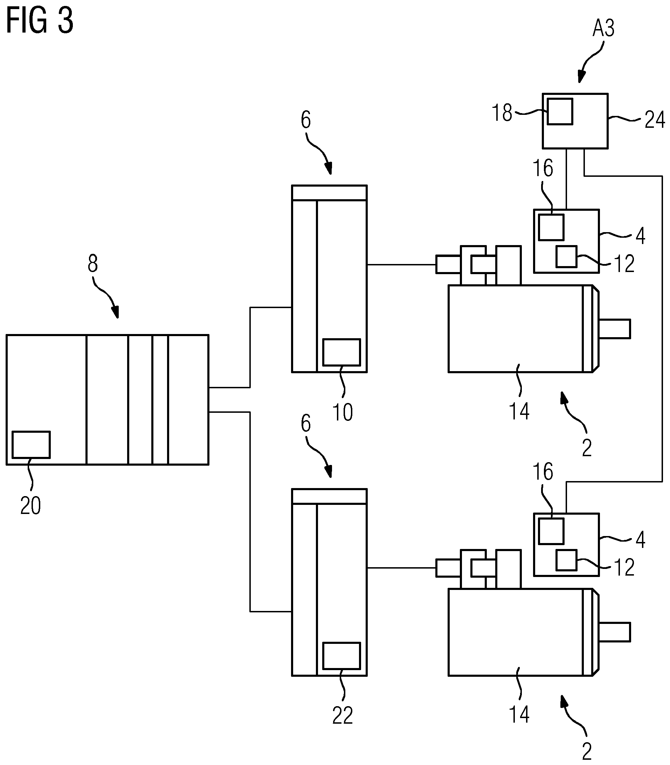

FIG 3 zeigt eine schematische Darstellung eines dritten Antriebssystems A3 mit zwei umrichtergesteuerten elektrischen rotierenden Maschinen 2 und jeweils einer Sensoreinheit 4. Alternativ weist das Antriebssystem A3 mehr als zwei elektrische rotierende Maschinen 2 auf. Die elektrischen rotierenden Maschinen 2 werden jeweils von einem Umrichter 6 mit jeweils einer eigenen Signatur 10, 22 gespeist, wobei die Umrichter 6 von einer gemeinsamen Ansteuervorrichtung 8 angesteuert werden. Alternativ werden zumindest zwei der elektrischen rotierenden Maschinen 2 von einem gemeinsamen Umrichter 6 angesteuert. Auf die jeweiligen Leistungssignale wird die Signatur 10, 22 des jeweiligen Umrichters 6 sowie die Signatur 20 der Ansteuervorrichtung 8, wie in FIG 2 gezeigt, aufmoduliert. Die jeweiligen Sensoreinheiten 4 sind mit einer Zentraleinheit 24 verbunden, wobei die Auswertung der von den jeweiligen Sensoren 12 detektierten Leistungssignale in der Auswerteeinheit 16 erfolgt. Alternativ werden die Leistungssignale zumindest teilweise in einer Auswerteeinheit in der Zentraleinheit 24 ausgewertet. Die Steuereinheit 18, welche den Verfahrensablauf steuert, ist in der Zentraleinheit 24 angeordnet. Die Verbindung zur Zentraleinheit 24, welche beispielsweise als Mobiltelefon, Tablet oder PC ausgeführt ist, erfolgt drahtlos, kabelgebunden oder optisch. Eine drahtlose Verbindung wird insbesondere über WIFI, Bluetooth oder NFC hergestellt. Die weitere Ausgestaltung des dritten Antriebssystems A3 in FIG 3 entspricht der Ausführung in FIG 2.

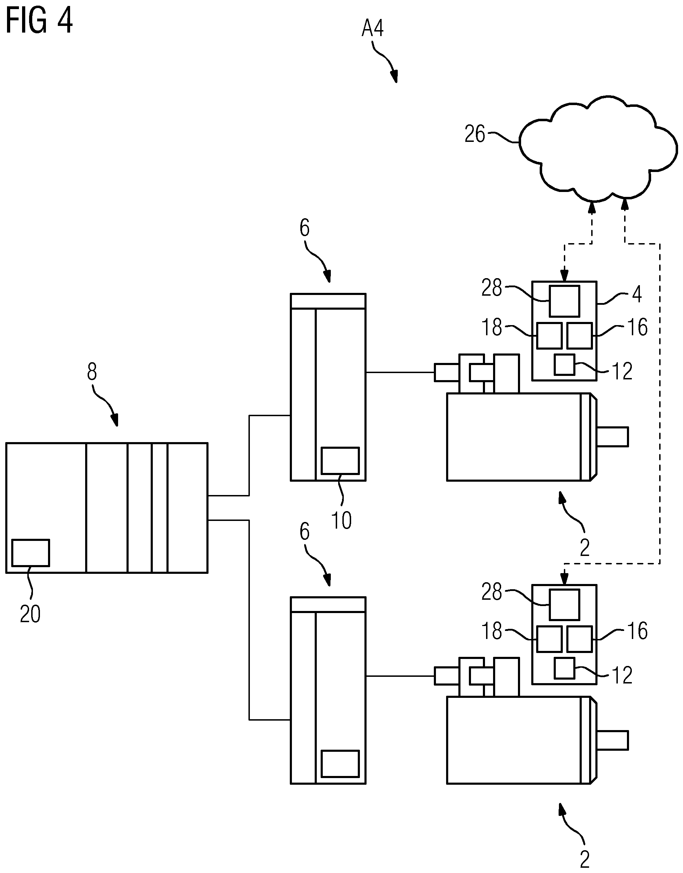

FIG 4 zeigt eine schematische Darstellung eines vierten Antriebssystems A4 mit zwei umrichtergesteuerten elektrischen rotierenden Maschinen 2, jeweils einer Sensoreinheit 4 und einer Anbindung an eine Cloud 26, wobei eine Cloud eine virtualisierte IT-Infrastruktur ist, die beispielsweise Speicherplatz, Rechenleistung und/oder Software bereitstellt. Eine Nutzung einer derartiger virtualisierter IT-Infrastruktur-Ressourcen erfolgt über eine Kommunikationsschnittstelle, beispielsweise über das Internet. Die Sensoreinheiten 4, welche den jeweiligen elektrischen rotierenden Maschinen 2 zugeordnet sind, weisen jeweils eine Kommunikationseinheit 28 auf, über welche eine, insbesondere drahtlose, Verbindung mit der Cloud 26 hergestellt wird. Die drahtlose Verbindung wird beispielsweise über GSM EDGE oder WIFI hergestellt. Eine Auswertung der Daten, insbesondere der Vergleich mit einer Datenbank, erfolgt in der Cloud 26. Die weitere Ausgestaltung des vierten Antriebssystems A4 in FIG 4 entspricht der Ausführung in FIG 3.

Zusammenfassend betrifft die Erfindung ein Verfahren zur Identifizierung mindestens einer elektrischen Schaltung. Für eine einfache und fälschungssichere Implementierung wird vorgeschlagen, dass eine Signatur 10, 20, 22 verwendet wird, welche auf ein Leistungssignal aufmoduliert wird, wobei das Leistungssignal im Bereich einer Last erfasst und zur Identifizierung der elektrischen Schaltung ausgewertet wird.

## Patentansprüche

1. Verfahren zur Identifizierung mindestens einer elektrischen Schaltung mittels einer Signatur (10,20,22), welche auf ein Leistungssignal aufmoduliert wird,
wobei das Leistungssignal im Bereich einer Last erfasst und zur Identifizierung der elektrischen Schaltung ausgewertet wird.

2. Verfahren nach Anspruch 1,
wobei das Leistungssignal von einem Umrichter (6) zur Ansteuerung einer elektrischen rotierenden Maschine (2) erzeugt wird und
wobei das Leistungssignal im Bereich der elektrischen rotierenden Maschine (2) erfasst wird.

3. Verfahren nach einem der Ansprüche 1 oder 2,
wobei die Signatur (10,20,22) als Gleichtaktsignal auf ein mehrphasiges Leistungssignal aufmoduliert wird.

4. Verfahren nach einem der vorherigen Ansprüche,
wobei die Signatur (10,20,22) mit einer Amplitude aufmoduliert wird, die mindestens 60 dB unter einer Amplitude des Leistungssignals liegt.

5. Verfahren nach einem der vorherigen Ansprüche,
wobei das Leistungssignal von einer Sensoreinheit (4), insbesondere kontaktlos, erfasst wird.

6. Verfahren nach Anspruch 5,
wobei von der Sensoreinheit (4) ein magnetisches und/oder ein elektrisches Feld gemessen werden.

7. Verfahren nach einem der Ansprüche 5 oder 6,
wobei von der Sensoreinheit (4) eine Vibration gemessen wird.

8. Verfahren nach einem der Ansprüche 5 bis 7,
wobei die Sensoreinheit (4) einen Stromwandler umfasst.

9. Verfahren nach einem der vorherigen Ansprüche,
wobei das Leistungssignal durch ein Korrelationsverfahren ausgewertet wird.

10. Verfahren nach einem der vorherigen Ansprüche,
wobei für die Signatur (10,20,22) mindestens eine Seriennummer verwendet wird.

11. Verfahren nach einem der vorherigen Ansprüche,
wobei die Signatur (10,20,22) steganographisch verschlüsselt wird.

12. Steuereinheit (18) zur Durchführung eines Verfahrens nach einem der Ansprüche 1 bis 11.

13. Computerprogramm zur Durchführung eines Verfahrens nach einem der Ansprüche 1 bis 11 bei Ablauf in einer Steuereinheit (12) nach Anspruch 12.

14. Computerprogrammprodukt mit einem Computerprogramm nach Anspruch 13.

15. Antriebssystem (A1,A2,A3,A4) mit mindestens einer elektrischen rotierenden Maschine (2), mindestens einem Umrichter (6) und mindestens einer Steuereinheit (18) nach Anspruch 12.
